(19) Europäisches Patentamt
European Patent Office
Office européen des brevets

(11) **EP 3 845 773 A1**

(12) **EUROPEAN PATENT APPLICATION**
published in accordance with Art. 153(4) EPC

(43) Date of publication:
**07.07.2021 Bulletin 2021/27**

(21) Application number: **19856154.0**

(22) Date of filing: **05.06.2019**

(51) Int Cl.:
*F16F 15/02* (2006.01)  *B23Q 11/00* (2006.01)

(86) International application number:
**PCT/JP2019/022285**

(87) International publication number:
**WO 2020/044704 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **31.08.2018 JP 2018163386**

(71) Applicant: **Panasonic Intellectual Property
Management Co., Ltd.
Osaka-shi, Osaka 540-6207 (JP)**

(72) Inventors:
• **FURUKAWA, Akira**
  **Osaka-shi Osaka 540-6207 (JP)**
• **FUJIWARA, Hiroshi**
  **Osaka-shi, Osaka 540-6207 (JP)**

(74) Representative: **SSM Sandmair
Patentanwälte Rechtsanwalt
Partnerschaft mbB
Joseph-Wild-Straße 20
81829 München (DE)**

(54) **VIBRATION CONTROL DEVICE**

(57) A damping device includes: a housing (1); a drive-side actuator (4) that includes a drive-side stator (2) and a drive-side mover (3) and is connected to the housing (1); a damping-side actuator (7) that includes a damping-side stator (5) and a damping-side mover (6) and is connected to the housing (1); a first signal calculator (8) that generates a drive signal for the drive-side actuator (4) based on a control command; and a second signal calculator (9) that generates a drive signal for the damping-side actuator (7) based on the control command to reduce or offset, by a vibration component of the housing (1) produced by driving of the damping-side actuator (7), a natural frequency component of the housing (1) produced by driving of the drive-side actuator (4).

FIG. 1

EP 3 845 773 A1

**Description**

TECHNICAL FIELD

The present invention relates to a damping device that controls an actuator connected to a housing to suppress vibration of the housing.

BACKGROUND ART

Nowadays, various devices, such as semiconductor manufacturing devices, machine tools, and conveying devices use actuators whose movements are controlled by controllers to move objects such as workpieces and products in a predetermined direction. To produce more products in a short time, there is a demand to reduce the time required to move workpieces as much as possible. A movable part of an actuator need be moved at high speed to meet such a demand and the reaction force (excitation force) acting on the machine increases as the acceleration during operation increases. In particular, linear motors with large acceleration have large thrust during operation, which increases the excitation force during acceleration and deceleration when objects are moved. This can lead to problems, such as the accuracy of the relative position between the workpiece and the device deteriorates, and other devices vibrate as vibrations are transmitted to the floor where the device is placed.

In order to solve these problems, a conventional machining apparatus places a weight driving device on a support device. A controller drives the placed weight driving device to suppress the vibration caused by the movement of the horizontal moving part in the machining apparatus (for example, see Patent Literature (PTL) 1).

Citation List

Patent Literature

PTL 1: Japanese Unexamined Patent Application Publication No. 2003-181739

SUMMARY OF THE INVENTION

TECHNICAL PROBLEMS

However, the conventional technique has the following problems.

The machining apparatus described in PTL 1 operates AC motor 11b so that the phase of the inertial force due to weight 18 is opposite to the phase of the moment force due to the horizontal excitation force during the movement of X table 7, based on the current command signal or the voltage command signal output to motor 11a. When X table 7 is moved to the right, the reaction force of the thrust for moving X table 7 causes leftward force acting on bed 6. On the other hand, when weight 18 is moved to the left, the reaction force of the thrust for moving weight 18 causes rightward force acting on bed 6. As a result, the force acting on bed 6 is offset to suppress the occurrence of the vibration, but it is difficult to completely offset when the machining apparatus is desired to be made smaller and lighter.

When the mass of weight 18 is reduced, the acceleration needs to be increased to achieve substantially the same thrust. When the acceleration is increased, the speed and the displacement naturally increase. Consequently, the size of the machining apparatus increases. Moreover, when the maximum displacement of weight 18 is reduced, the mass needs to be increased to achieve substantially the same thrust. When the mass is increased, the strength of the component supporting weight 18 needs to be increased. Consequently, the weight of the machining apparatus increases.

The present invention has been conceived to address the above problems and aims to provide a damping device that reduces or offsets, by one or more vibration components produced by driving of a damping-side actuator, one or more vibration components produced in the housing by driving of a drive-side actuator.

SOLUTION TO PROBLEMS

A damping device according to the present invention includes: a housing; a drive-side actuator that includes a drive-side stator and a drive-side mover and is connected to the housing; a damping-side actuator that includes a damping-side stator and a damping-side mover and is connected to the housing; a first signal calculator that generates a drive signal for the drive-side actuator based on a control command; and a second signal calculator that generates a drive signal for the damping-side actuator based on the control command to reduce or offset, by a vibration component of the housing produced by driving of the damping-side actuator, a natural frequency component of the housing produced by driving of the drive-side actuator.

ADVANTAGEOUS EFFECTS OF INVENTION

With the damping device according to the present invention, one or more natural frequency components of the housing produced by driving of the drive-side actuator can be reduced or offset by one or more vibration components of the housing produced by driving of the damping-side actuator by generating the drive signal for the drive-side actuator and the drive signal for the damping-side actuator based on the control command.

BRIEF DESCRIPTION OF DRAWINGS

FIG. 1 is a schematic diagram of an exemplary configuration of a damping device according to an embodiment of the present invention.
FIG. 2 is a schematic diagram of another exemplary configuration of the damping device according to the embodiment of the present invention.
FIG. 3 is a schematic diagram of another exemplary configuration of the damping device according to the embodiment of the present invention.
FIG. 4 is a block diagram of a first signal calculator and a second signal calculator of the damping device according to the embodiment of the present invention.
FIG. 5 is a schematic diagram of an exemplary configuration of a conventional device that includes a housing and a drive-side actuator and does not include a damping-side actuator.
FIG. 6 is a block diagram that simply illustrates a control target in the conventional device that includes the housing and the drive-side actuator and does not include the damping-side actuator.
FIG. 7 shows time-series waveforms when a control command is input to the conventional device that includes the housing and the drive-side actuator and does not include the damping-side actuator.
FIG. 8 is a block diagram that simply illustrates a control target in the damping device according to the embodiment of the present invention.
FIG. 9 is a diagram of an exemplary configuration of a filtering processor according to the embodiment of the present invention.
FIG. 10 is a diagram of another exemplary configuration of the filtering processor according to the embodiment of the present invention.
FIG. 11 shows time-series waveforms when a control command is input to the damping device according to the embodiment of the present invention.
FIG. 12 shows comparisons of time-series waveforms between the conventional device and the damping device according to the embodiment of the present invention when a control command is input to each of the conventional device and the damping device according to the embodiment of the present invention.

DESCRIPTION OF EXEMPLARY EMBODIMENT

EMBODIMENT

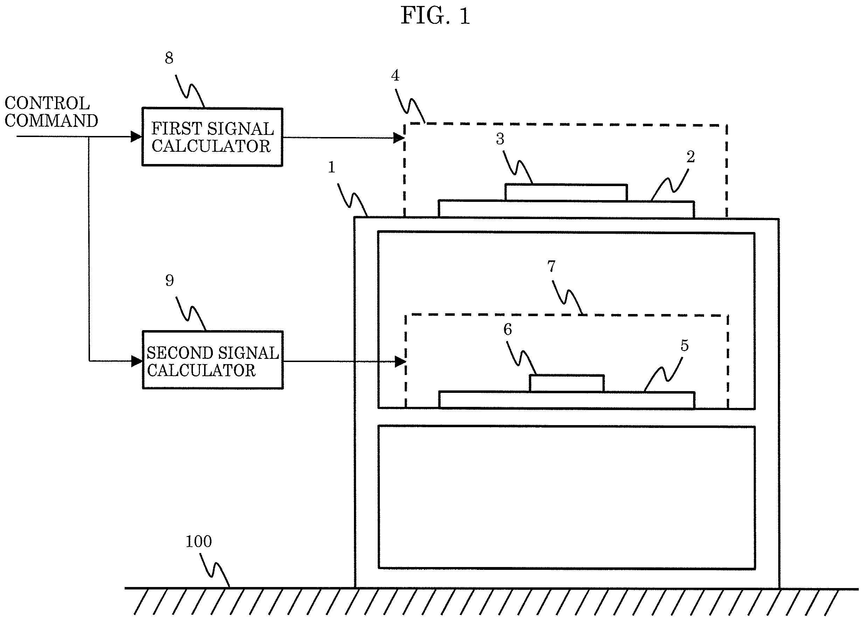

FIG. 1 is a schematic diagram of a whole configuration of a damping device according to an embodiment of the present invention.

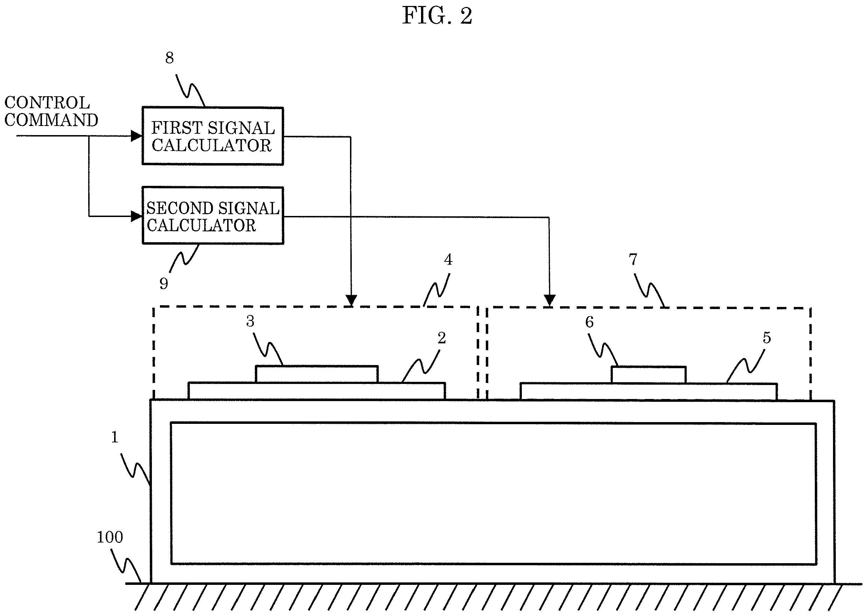

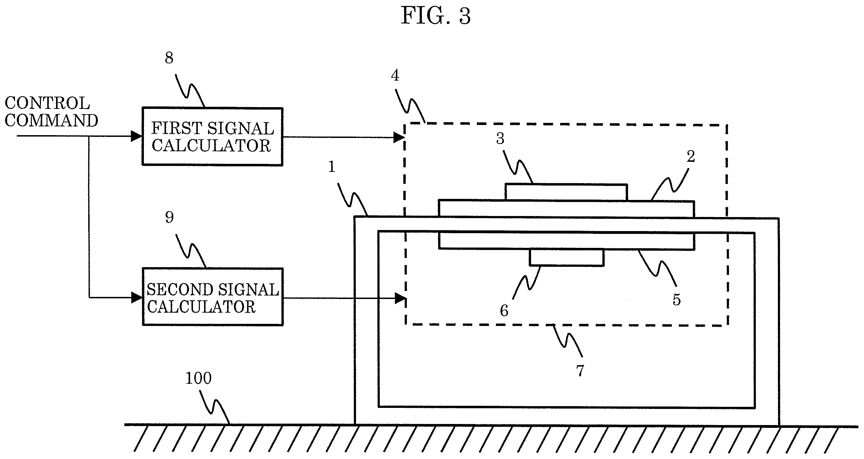

In FIG. 1, the damping device includes housing 1, drive-side actuator 4, damping-side actuator 7, first signal calculator 8, and second signal calculator 9. The damping device is placed on floor 100. In FIG. 1, drive-side actuator 4 and damping-side actuator 7 are located on different planes, but damping-side actuator 7 may be placed in a space where damping-side actuator 7 can be placed when drive-side actuator 4 is placed in the damping device. For example, drive-side actuator 4 and damping-side actuator 7 may be placed on the same plane as illustrated in FIG. 2 or on both sides of a plane of the housing as illustrated in FIG. 3.
Here, the case where a control command is a speed command will be described. Since a position is obtained by integrating the speed, there is no need to say that a similar concept can be applied to a position command.
Drive-side actuator 4 includes drive-side stator 2 and drive-side mover 3, and is driven in accordance with the drive signal for the drive-side actuator generated by first signal calculator 8. Examples of drive-side actuator 4 include a ball-screw mechanism that connects the output shaft of the servo motor to the screw shaft, and a linear motor when high-speed and high-positioning accuracy is required.
Damping-side actuator 7 includes damping-side stator 5 and damping-side mover 6, and is driven in accordance with the drive signal for the damping-side actuator generated by second signal calculator 9. Examples of damping-side actuator 7 include a ball-screw mechanism and a linear motor.

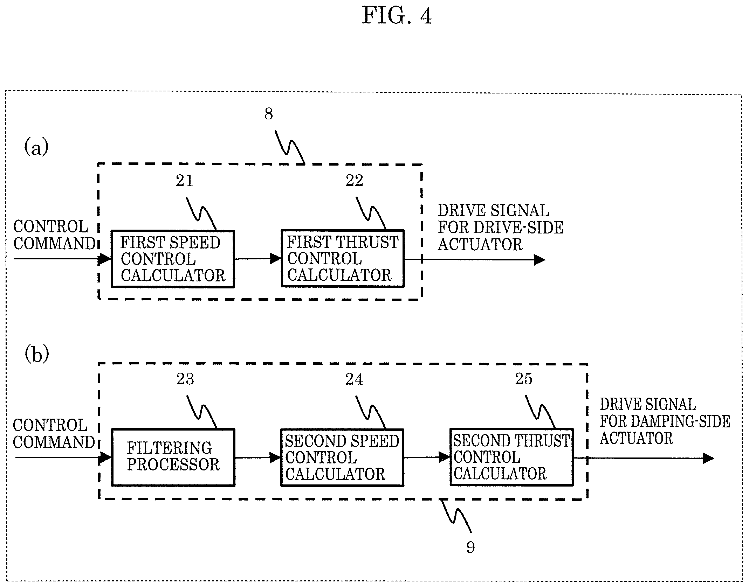

FIG. 4 illustrates an exemplary configuration of first signal calculator 8 in (a), and an exemplary configuration of second signal calculator 9 in (b).

First signal calculator 8 generates a current command, a thrust command, or a torque command by a known method, for example, two-degree-of-freedom control or feedback control so that the current command, the thrust command, or the torque command can follow the control command (speed command) that is input. To follow the generated current command, thrust command, or torque command, a drive signal for the drive-side actuator is generated by a known method, for example, two-degree-of-freedom control or feedback control.

First signal calculator 8 includes first speed control calculator 21 and first thrust control calculator 22. First speed control calculator 21 calculates a thrust command by a known method, for example, two-degree-of-freedom control or feedback control so that the thrust command can follow the control command (speed command) that is input. First thrust control calculator 22 outputs a drive signal for the drive-side actuator calculated by a known method, for example, two-degree-of-freedom control or feedback control so that the drive signal can follow the thrust command calculated by first speed control calculator 21.

Second signal calculator 9 includes filtering processor 23, second speed control calculator 24, and second thrust control calculator 25. Filtering processor 23 performs filtering described below on the control command and outputs a filtered control command. Second speed control calculator 24 calculates a thrust command by a known method, for example, two-degree-of-freedom control or feedback control so that the thrust command can follow the filtered control command that is input. Second thrust control calculator 25 outputs a drive signal for the damping-side actuator calculated by a known method, for example, two-degree-of-freedom control or feedback control so that the drive signal can follow the thrust command calculated by second speed control calculator 24.

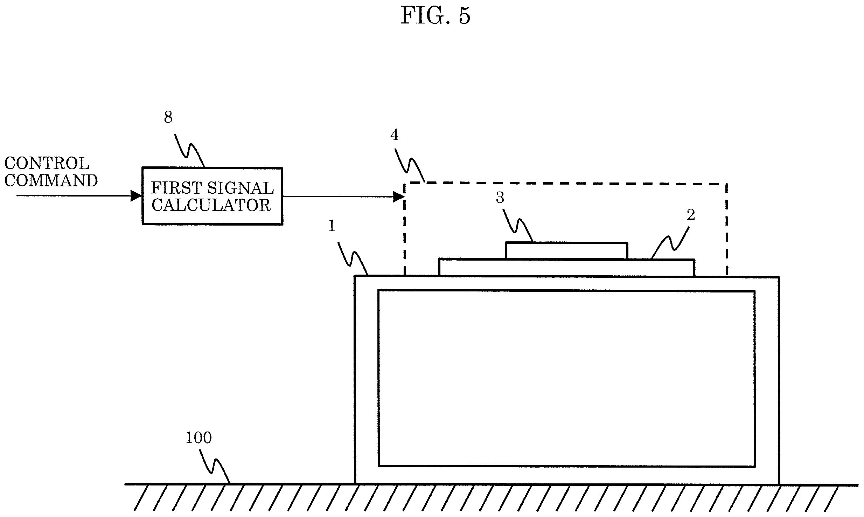

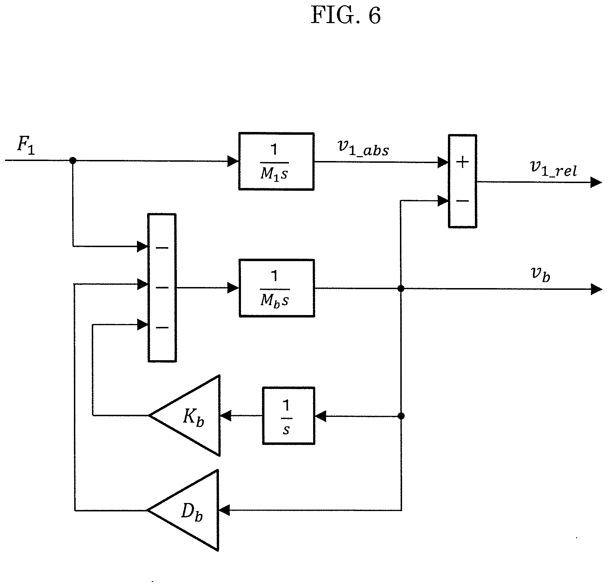

The operations of a device that includes housing 1 and drive-side actuator 4 and does not include damping-side actuator 7 as illustrated in FIG. 5 are described first. A simple block diagram of this device is illustrated in FIG. 6. M1 represents the mass of the drive-side mover, Mb represents the mass of housing 1, Kb represents the stiffness of housing 1, and Db represents the viscosity of housing 1.

Thrust F1 produced in drive-side actuator 4 acts on drive-side mover 3, and absolute speed v1_abs of drive-side mover 3 is given by expression (1).
[Math. 1]

$$v_{1\_abs} = \frac{1}{M_1 s} F_1 \quad \cdot \quad \cdot \quad \cdot \quad (1)$$

On the other hand, the reaction force of thrust F1 comes into housing 1 via drive-side stator 2, and thus speed vb and acceleration ab of housing 1 are given by expression (2). In other words, resonance frequency ωb of the control target is a natural frequency of housing 1, as in expression (3).
[Math. 2]

$$\begin{cases} v_b = -\frac{s}{M_b s^2 + D_b s + K_b} F_1 \\ a_b = -\frac{s^2}{M_b s^2 + D_b s + K_b} F_1 \end{cases} \quad \cdot \quad \cdot \quad \cdot \quad (2)$$

[Math. 3]

$$\omega_b = \sqrt{\frac{K_b}{M_b}} \quad \cdot \quad \cdot \quad \cdot \quad (3)$$

Drive-side actuator 4 operates starting from a standstill state, accelerates and decelerates, and returns to the standstill state. When the time period from the standstill state to a next standstill state is denoted as T, the thrust produced in such a time period can be expressed as expression (4).
[Math. 4]

$$F_1 = \sum_{k=1}^{\infty} \left( F_{1sk} \sin\frac{2\pi kt}{T} + F_{1ck} \cos\frac{2\pi kt}{T} \right) \cdots (4)$$

Expression (4) is a time domain expression. Therefore, when expression (4) is Laplace transformed and rewritten as an expression in the s-domain, expression (5) is given.
[Math. 5]

$$F_1 = \sum_{k=1}^{\infty} \left( F_{1sk} \frac{2\pi kT}{T^2 s^2 + (2\pi k)^2} + F_{1ck} \frac{T^2 s}{T^2 s^2 + (2\pi k)^2} \right) \cdots (5)$$

Substituting expression (5) into expression (2) yields expression (6).
[Math. 6]

$$\begin{cases} v_b = -\dfrac{s}{M_b s^2 + D_b s + K_b} \sum_{k=1}^{\infty} \left( F_{1sk} \dfrac{2\pi kT}{T^2 s^2 + (2\pi k)^2} + F_{1ck} \dfrac{T^2 s}{T^2 s^2 + (2\pi k)^2} \right) \\ a_b = -\dfrac{s^2}{M_b s^2 + D_b s + K_b} \sum_{k=1}^{\infty} \left( F_{1sk} \dfrac{2\pi kT}{T^2 s^2 + (2\pi k)^2} + F_{1ck} \dfrac{T^2 s}{T^2 s^2 + (2\pi k)^2} \right) \end{cases} \cdots (6)$$

The amplitude of the fundamental wave component in one or more signals contained in thrust F1 is generally larger than the amplitudes of other frequency components. Therefore, thrust F1 is simplified as expression (7).
[Math. 7]

$$F_1 \cong F_{1s} \frac{2\pi T}{T^2 s^2 + (2\pi)^2} \cdots (7)$$

In this case, acceleration ab of housing 1 is given by expression (8). It can be understood that acceleration ab of housing 1 is a value obtained by superposing one or more components of resonance frequency ωb on one or more frequency components contained in the thrust.
[Math. 8]

$$a_b = -\frac{s^2}{M_b s^2 + D_b s + K_b} \frac{2\pi T}{T^2 s^2 + (2\pi)^2} F_{1s} \cdots (8)$$

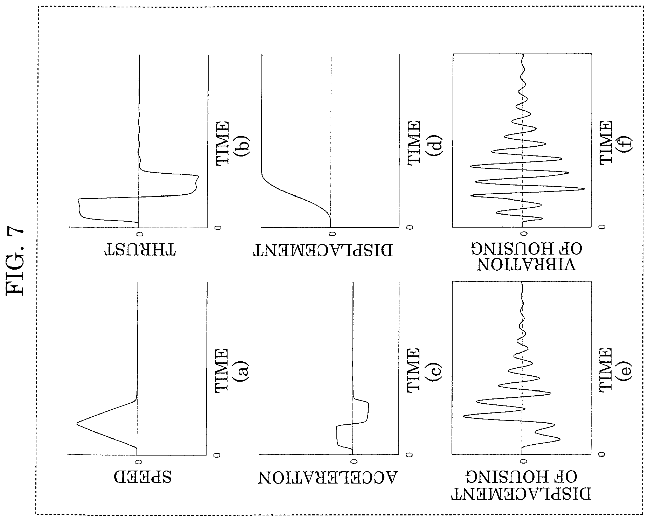

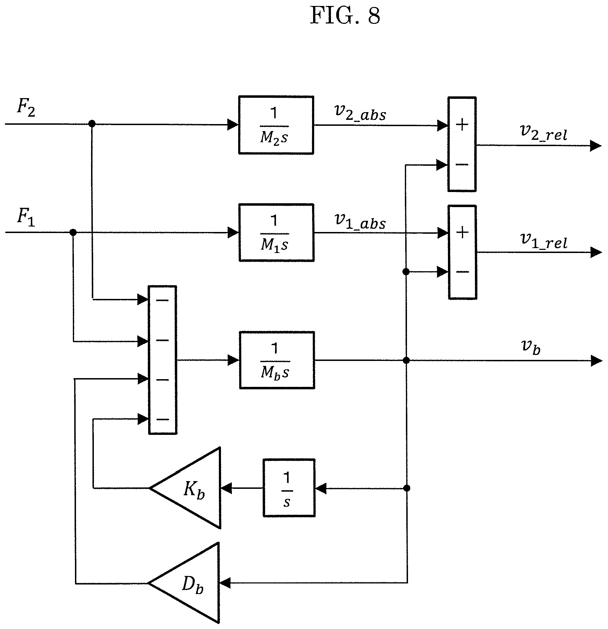

FIG. 7 shows time series waveforms when a control command is input to the device in FIG. 6. In FIG. 7, (a) shows relative speed v1_rel of the drive-side actuator with respect to housing 1, (b) shows thrust F1 of the drive-side actuator, (c) shows relative acceleration a1_rel of the drive-side actuator with respect to housing 1, (d) shows relative displacement x1_rel of the drive-side actuator with respect to housing 1, (e) shows displacement xb of housing 1, and (f) shows acceleration (vibration) ab of housing 1. Starting at a time when the thrust changes significantly, housing 1 vibrates in a vibration waveform obtained by superposing the one or more natural frequency components of housing 1 on a signal having an opposite phase with respect to the thrust.
Next, operations of the damping device according to the present embodiment illustrated in the block diagram of FIG. 8 will be described. M2 represents the mass of the damping-side mover.
Thrust F1 produced in drive-side actuator 4 acts on drive-side mover 3, and absolute speed v1_abs of drive-side mover 3 is given by expression (1).
Thrust F2 produced in damping-side actuator 7 acts on damping-side mover 6, and absolute speed v2_abs of damping-side mover 6 is given by expression (9).
[Math. 9]

$$v_{2\_abs} = \frac{1}{M_2 s} F_2 \quad \cdot \quad \cdot \quad \cdot \quad (9)$$

On the other hand, the reaction force of thrust F1 comes into housing 1 via drive-side stator 2, the reaction force of thrust F2 comes into housing 1 via damping-side stator 5. Thus, speed vb and acceleration ab of housing 1 are given by expression (10).
[Math. 10]

$$\begin{cases} v_b = -\dfrac{s}{M_b s^2 + D_b s + K_b}(F_1 + F_2) \\ a_b = -\dfrac{s^2}{M_b s^2 + D_b s + K_b}(F_1 + F_2) \end{cases} \quad \cdot \quad \cdot \quad \cdot \quad (10)$$

The following describes how to apply thrust F2 to reduce or offset the one or more natural frequency components produced by the reaction force of thrust F1. Thrust F1 and thrust F2 are produced due to the one or more drive signals obtained from the control command, and therefore the relational expression between thrust F1 and thrust F2 is expressed as expression (11).
[Math. 11]

$$F_2 = G(s)F_1 \quad \cdot \quad \cdot \quad \cdot \quad (11)$$

Substituting expression (11) into expression (10) yields expression (12).
[Math. 12]

$$a_b = -\frac{s^2}{M_b s^2 + D_b s + K_b}\big(1 + G(s)\big)F_1 \quad \cdot \quad \cdot \quad \cdot \quad (12)$$

In order to reduce the one or more natural frequency components in expression (3) with 1 + G(s), a band-stop filter as expressed as expression (13) that blocks one or more resonance frequencies may be used, for example. Here, $\omega$b represents the central frequency of the stop band, $\zeta$ represents the width of the stop band, and d represents the depth of the stop band.
[Math. 13]

$$1 + G(s) = \frac{s^2 + 2d\zeta\omega_b s + \omega_b{}^2}{s^2 + 2\zeta\omega_b s + \omega_b{}^2} \quad \cdot \quad \cdot \quad \cdot \quad (13)$$

Therefore, G(s) which satisfies expression (13) may be a band-pass filter as expressed as expression (14), for example.
[Math. 14]

$$G(s) = -\frac{2(1-d)\zeta\omega_b s}{s^2 + 2\zeta\omega_b s + \omega_b{}^2} \quad \cdot \quad \cdot \quad \cdot \quad (14)$$

Note that 1 + G(s) is sufficient if it is a filter that can block one or more resonance frequencies. Therefore, the same effect can be obtained when G(s) is a filter obtained by combining a low-pass filter and a high-pass filter as expressed as expression (15), for example. Here, k1 and k2 are real numbers greater than 1.
[Math. 15]

$$G(s) = -\frac{k_1 \omega_b}{s + k_1 \omega_b} \frac{k_2 s}{k_2 s + \omega_b} \cdots (15)$$

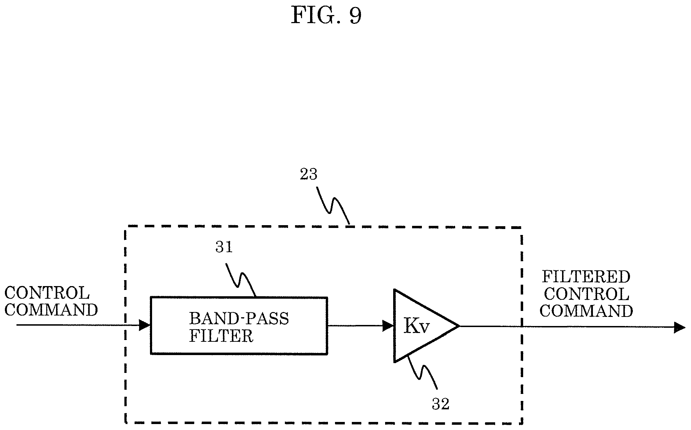

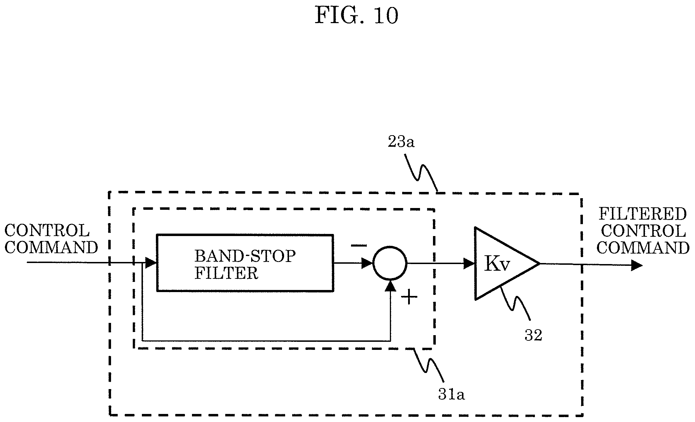

Thrust F2 of the damping-side actuator may be a value obtained by multiplying thrust F1 of the drive-side actuator by filter G(s) as in expression (14), for example. In other words, filtering processor 23 may be configured as shown in FIG. 9. Band-pass filter 31 performs filtering based on expression (14), and the signal output from band-pass filter 31 is multiplied by gain 32 to output a filtered control command.
It goes without saying that the same effect can be obtained when band-pass filter 31 is implemented by subtracting the signal output from the band-stop filter from 1, as illustrated in FIG. 10. FIG. 9 illustrates a filtering processor including one band-pass filter, but it is also possible to include more than one filter. The same effect can be obtained with a filtering processor including a filter expressed as expression (15).
How gain 32 is determined will be described. Thrust is considered in expression (14) or expression (15), but in practice, the control command needs to be filtered. When the ratio of the mass of the drive-side mover to the mass of the damping-side mover is Km, the speed of the damping-side mover should be Km times the speed of the drive-side mover based on expression (1) and expression (9) to obtain the same thrust. In other words, gain 32 needs to be applied by expression (16) to achieve the filtering effect of expression (14) or expression (15).
[Math. 16]

$$K_v = K_m \cdots (16)$$

However, when gain 32 is set to a large value, the displacement of the damping-side mover increases. This may limit the location of the placement in the housing. In addition, due to the increased speed or acceleration, actuators that can be used as the damping-side actuator may be limited. Therefore, gain 32 may be set to a value as defined by expression (17), depending on the limitation of the placement in the housing and the limitation of the damping-side actuator.
[Math. 17]

$$K_v \leq K_m \cdots (17)$$

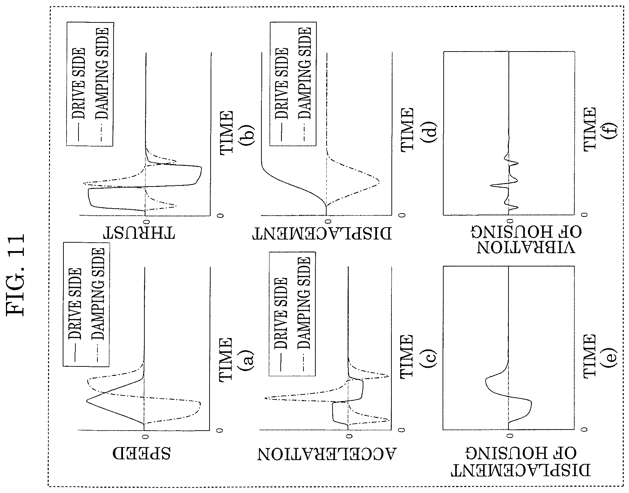

FIG. 11 shows time-series waveforms when a control command is input to the device in FIG. 8. In FIG. 11, (a) shows relative speed v1_rel of the drive-side actuator with respect to housing 1 and relative speed v2_rel of the damping-side actuator with respect to housing 1, (b) shows thrust F1 of the drive-side actuator and thrust F2 of the damping-side actuator, (c) shows relative acceleration a1_rel of the drive-side actuator with respect to housing 1 and relative acceleration a2_rel of the damping-side actuator with respect to housing 1, (d) shows relative displacement x1_rel of the drive-side actuator with respect to housing 1 and relative displacement x2_rel of the damping-side actuator with respect to housing 1, (e) shows displacement xb of housing 1, and (f) shows acceleration (vibration) ab of housing 1. Unlike the results shown in FIG. 7, in which vibration of one or more natural frequency components of housing 1 occurs, one or more vibration components are reduced.

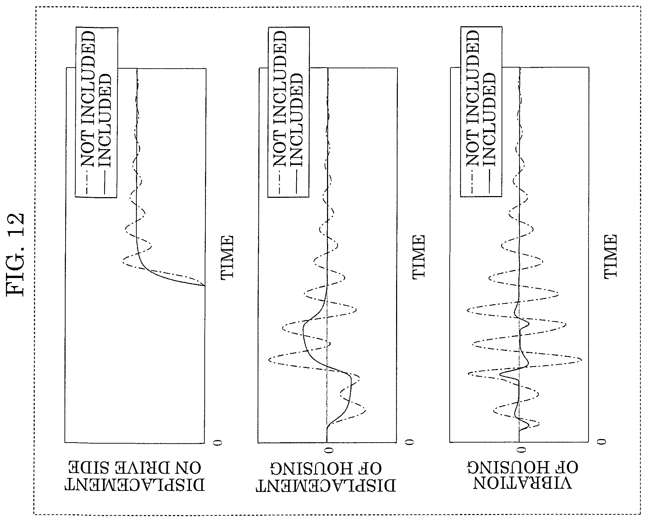

FIG. 12 shows comparisons between the time-series waveforms of the conventional device shown in FIG. 7 and the time-series waveforms of the damping device according to the embodiment of the present invention shown in FIG. 11. The relative displacement of the driver, which has been vibratory in the conventional device, is settled well in the damping device according to the embodiment of the present invention. In addition, the vibration of the housing in which one or more natural frequency components are observed in the conventional device can be reduced by the damping device according to the embodiment of the present invention.

INDUSTRIAL APPLICABILITY

As described above, the damping device according to the present invention reduces or offsets, by the thrust produced when the damping-side actuator moves, one or more natural frequency components of the housing produced by the reaction force acting on the housing by thrust produced when the drive-side actuator moves. Therefore, the drive-side mover can be moved at high speed and is applicable to devices that are desired to produce many products in a short time, such as semiconductor manufacturing devices, mounting devices, machine tools, and conveying devices.

REFERENCE MARKS IN THE DRAWINGS

1    housing
2    drive-side stator
3    drive-side mover
4    drive-side actuator
5    damping-side stator
6    damping-side mover
7    damping-side actuator
8    first signal calculator
9    second signal calculator
21   first speed control calculator
22   first thrust control calculator
23   filtering processor
24   second speed control calculator
25   second thrust control calculator
31   band-pass filter
32   gain

**Claims**

**1.** A damping device, comprising:

a housing;
a drive-side actuator that includes a drive-side stator and a drive-side mover and is connected to the housing;
a damping-side actuator that includes a damping-side stator and a damping-side mover and is connected to the housing;
a first signal calculator that generates a drive signal for the drive-side actuator based on a control command; and
a second signal calculator that generates a drive signal for the damping-side actuator based on the control command to reduce or offset, by a vibration component of the housing produced by driving of the damping-side actuator, a natural frequency component of the housing produced by driving of the drive-side actuator.

**2.** The damping device according to claim 1, wherein
the control command is a position command or a speed command.

**3.** The damping device according to claim 1 or 2, wherein
the first signal calculator calculates a driver control command for generating the drive signal for the drive-side actuator based on the control command, and
the second signal calculator:

includes a filtering processor based on a mechanical constant of the damping device; and
calculates a damper control command for generating the drive signal for the damping-side actuator by passing the control command or the driver control command through the filtering processor.

**4.** The damping device according to claim 3, wherein
the filtering processor includes at least one band-pass filter.

5. The damping device according to claim 4, wherein
a passing frequency of the band-pass filter in the filtering processor is a resonance frequency of the housing.

6. The damping device according to any one of claims 3 to 5, wherein
the filtering processor applies a gain Kv that is less than or equal to a mass ratio obtained by dividing a mass of the drive-side mover by a mass of the damping-side mover.

FIG. 1

CONTROL COMMAND

8 — FIRST SIGNAL CALCULATOR

9 — SECOND SIGNAL CALCULATOR

1  2  3  4  5  6  7

100

FIG. 2

## FIG. 3

FIG. 4

(a)

CONTROL
COMMAND

8

21

FIRST SPEED
CONTROL
CALCULATOR

22

FIRST THRUST
CONTROL
CALCULATOR

DRIVE SIGNAL
FOR DRIVE-SIDE
ACTUATOR

(b)

CONTROL
COMMAND

23

FILTERING
PROCESSOR

24

SECOND SPEED
CONTROL
CALCULATOR

25

SECOND THRUST
CONTROL
CALCULATOR

DRIVE SIGNAL
FOR DAMPING-SIDE
ACTUATOR

9

EP 3 845 773 A1

FIG. 5

CONTROL
COMMAND → FIRST SIGNAL
CALCULATOR  8

4

3  2

1

100

FIG. 6

EP 3 845 773 A1

FIG. 7

FIG. 8

FIG. 9

CONTROL
COMMAND

23

31

BAND-PASS
FILTER

Kv

32

FILTERED
CONTROL
COMMAND

EP 3 845 773 A1

# FIG. 10

EP 3 845 773 A1

CONTROL
COMMAND

BAND-STOP
FILTER

$-$

$+$

23a

Kv

32

31a

FILTERED
CONTROL
COMMAND

# FIG. 11

FIG. 12

DISPLACEMENT ON DRIVE SIDE

- - - NOT INCLUDED
—— INCLUDED

TIME

DISPLACEMENT OF HOUSING

- - - NOT INCLUDED
—— INCLUDED

TIME

VIBRATION OF HOUSING

- - - NOT INCLUDED
—— INCLUDED

TIME

## INTERNATIONAL SEARCH REPORT

| International application No. |
| --- |
| PCT/JP2019/022285 |

**A. CLASSIFICATION OF SUBJECT MATTER**
Int. Cl. F16F15/02(2006.01)i, B23Q11/00(2006.01)i

According to International Patent Classification (IPC) or to both national classification and IPC

**B. FIELDS SEARCHED**

Minimum documentation searched (classification system followed by classification symbols)
Int. Cl. F16F15/02, B23Q11/00

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | WO 2008/066035 A1 (MITSUBISHI ELECTRIC CORP.) 05 June 2008, paragraphs [0014]-[0042], [0078]-[0083], fig. 1-4, 12 & US 2010/0060220 A1, paragraphs [0048]-[0076], [0112]-[0117], fig. 1-4, 12 & KR 10-2009-0073254 A & CN 101542411 A | 1-5<br>6 |
| X<br>A | JP 2011-124292 A (CANON INC.) 23 June 2011, paragraphs [0012]-[0029], fig. 1-3 (Family: none) | 1-2<br>3-6 |
| X<br>A | JP 2002-221249 A (CANON INC.) 09 August 2002, paragraphs [0066]-[0100], fig. 1-7 & US 2002/0104950 A1, paragraphs [0100]-[0135], fig. 1-7 | 1<br>2-6 |

☐ Further documents are listed in the continuation of Box C.     ☐ See patent family annex.

| | |
| --- | --- |
| *   Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09.07.2019 | Date of mailing of the international search report<br>23.07.2019 |
| --- | --- |
| Name and mailing address of the ISA/<br>   Japan Patent Office<br>   3-4-3, Kasumigaseki, Chiyoda-ku,<br>   Tokyo 100-8915, Japan | Authorized officer<br><br><br>Telephone No. |

Form PCT/ISA/210 (second sheet) (January 2015)

**EP 3 845 773 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003181739 A